# EUROPÄISCHE PATENTSCHRIFT

(11) **EP 4 569 312 B1**
(45) Veröffentlichungstag und Bekanntmachung des Hinweises auf die Patenterteilung: **23.09.2026**
(21) Anmeldenummer: 22772405.1
(22) Anmeldetag: 08.08.2022
(51) Int. Cl.: G01N 21/31, G01N 21/94, G01N 21/84

(54) **UNTERSUCHUNG EINES ZWEI BESTANDTEILE ENTHALTENDEN TEXTILEN FASERGEBILDES**
ANALYSIS OF A TEXTILE FIBER STRUCTURE COMPRISING TWO COMPONENTS
ANALYSE D'UNE STRUCTURE DE FIBRES TEXTILE COMPRENANT DEUX COMPOSANTS

(43) Veröffentlichungstag der Anmeldung: 18.06.2025
(73) Patentinhaber: Uster Technologies AG, 8610 Uster (CH)
(72) Erfinder: JACOB, Rainer, 8320 Fehraltorf (CH)
(74) Vertreter: Pliska, Pavel
(86) Internationale Anmeldenummer: PCT/CH2022/000005
(87) Internationale Veröffentlichungsnummer: WO 2024/031201

(56) Entgegenhaltungen:
- WO-A1-2019/051620
- WO-A1-2022/198342
- US-A1- 2017 241 839
- PRIORE RYAN J ET AL: "Spectral imaging of chemical compounds using multivariate optically enhanced filters integrated with InGaAs VGA cameras", PROCEEDINGS OF SPIE; [PROCEEDINGS OF SPIE ISSN 0277-786X VOLUME 10524], SPIE, US, vol. 9824, 12 May 2016 (2016-05-12), pages 98240P - 98240P, XP060068108, ISBN: 978-1-5106-1533-5, DOI: 10.1117/12.2222784

## Beschreibung

### FACHGEBIET

Die vorliegende Erfindung liegt auf dem Gebiet der Qualitätsüberwachung in der Textilindustrie. Sie betrifft ein System bestehend aus einem zwei Bestandteile enthaltenden textilen Fasergebilde und einer Vorrichtung zur Untersuchung des textilen Fasergebildes, gemäss dem ersten Patentanspruch. Sie betrifft ferner eine Vorrichtung und ein Verfahren zur Untersuchung eines zwei Bestandteile enthaltenden textilen Fasergebildes, gemäss den weiteren unabhängigen Patentansprüchen. Bevorzugte Anwendungen sind die Detektion von Fremdmaterialien in einem textilen Fasergebilde wie Faserflocken, Faservlies, Faserband, Vorgarn, Garn, Gewebe oder Gestrick und die Bestimmung eines Mischungsverhältnisses zweier Bestandteile solcher textilen Fasergebilde.

### STAND DER TECHNIK

Fremdmaterialien im Garn stellen eines der grossen Probleme heutiger Spinnereien dar. Es handelt sich dabei um Materialien, die sich vom Grundmaterial der Garnfasern, z. B. Baumwollfasern, unterscheiden. Sie können verschiedenen Ursprungs sein, wie z. B. Rückstände der Transportverpackung (Kunststoffverpackungen, Schnüre), Zivilisationsverunreinigungen (Russteile, Plastiksäcke) oder Rückstände von Lebewesen (menschliche oder tierische Haare, Pflanzenstängel). Fremdmaterialien führen zu Fadenbrüchen beim Spinnen und Weben, nehmen Farbstoff in anderer Weise an als das Grundmaterial und beeinflussen das Aussehen des textilen Endproduktes. Sie vermindern wesentlich den Wert des Endproduktes. Eine Übersicht über Gewebefehler, die durch Fremdmaterialien verursacht sind, und Empfehlungen zu ihrer Verminderung gibt Abs. 3.8 des USTER^{®} *NEWS BULLETIN NO.* 47 "The origins of fabric defects - and ways to reduce them", Uster Technologies AG, März 2010.

Fremdmaterialien können in verschiedenen Stufen des Garnherstellungsprozesses erkannt und allenfalls ausgeschieden werden.

Der Putzereiprozess ist Teil des Garnherstellungsprozesses und ist dem Kardierprozess vorgeschaltet. Ziel ist eine Aufbereitung des Rohmaterials, damit dieses in möglichst konstanter Qualität und frei von Verunreinigungen dem Kardierprozess zugeführt werden kann. Er umfasst das Öffnen des Rohmaterials, die Zuführung desselben in den Verarbeitungsprozess sowie das Mischen und Grobreinigen des zugeführten Materials. Je nach Auslegung des Prozesses können dabei einzelne Arbeitsschritte mehrmals durchlaufen werden oder auch wegfallen. Das Material hat in dieser Prozessstufe die Form von Faserflocken (zum Beispiel bei Baumwolle und Wolle) oder Schnipseln (bei Kunstfasermaterial). Der Transport des Materials erfolgt mit einem Luftstrom, der die verschiedenen Anlagen im Putzereiprozess verbindet.

Der Spinnprozess ist ein weiterer Teil des Garnherstellungsprozesses und ist dem Kardierprozess mittelbar oder unmittelbar nachgeschaltet. In diesem Prozess wird aus einem Faserband, z. B. dem Zwischenprodukt einer Karde, oder einem Vorgarn das Garn als Endprodukt gesponnen. Dabei wird das Vorgarn oder das Faserband durch Strecken und Verdrehen in seine endgültige Form, das Garn, umgewandelt. Während des Spinnens wird das Garn auf Spindeln aufgewickelt. Anschliessend werden die Spindeln auf grosse Spulen umgespult. Der Transport des Materials erfolgt in Form von Spindeln und Spulen.

Die Ausreinigung von Fremdmaterialien kann grundsätzlich in die folgenden drei Schritte unterteilt werden:
1) Erkennung des Fremdmaterials;
2) räumliche/zeitliche Lokalisation des Fremdmaterials innerhalb des Prüfguts; und
3) Ausscheidung des Fremdmaterials.

Im Putzereiprozess kann die Fremdmaterialreinigung manuell durchgeführt werden, bevor das Rohmaterial dem automatischen Verarbeitungsprozess zugeführt wird, oder die Reinigung kann maschinell durch eine entsprechende Anlage innerhalb des Putzereiprozesses durchgeführt werden. Heutzutage ist die maschinelle Reinigung üblich.

Bei der maschinellen Reinigung erfolgt die Erkennung und Lokalisation mit Hilfe von Detektionsvorrichtungen, welche Unterschiede in einem bestimmten Charakteristikum innerhalb des Materialstroms erkennen. Nicht abschliessend seien hier genannt: Reflexion und Transmission von elektromagnetischer Strahlung oder Fluoreszenz. In einfachsten Anwendungen wird mit optischen Detektionsvorrichtungen das menschliche Auge nachgeahmt und der Farbeindruck des Materialstroms analysiert, wobei entsprechende Farbunterschiede erkannt werden. Die US-6,452,157 B1 offenbart eine Vorrichtung zum Erkennen von Verunreinigungen, Fremdmaterialien und Fremdfasern in textilem Fasermaterial. Die Vorrichtung hat mindestens zwei Lichtquellen, die das Fasermaterial abwechselnd mit unterschiedlicher Farbe beleuchten. Ausserdem ist ein Sensor vorgesehen, der die Farben des vom Fasermaterial reflektierten Lichtes empfängt.

Zur Detektion von Fremdmaterialien, die für sichtbares Licht transparent sind oder eine ähnliche Farbe wie das Rohmaterial aufweisen, braucht es jedoch raffiniertere Detektionsvorrichtungen. In diesem Fall kann der Materialstrom mit Hilfe von solcher elektromagnetischen Strahlung analysiert werden, welche vom menschlichen Auge nicht wahrgenommen wird (Ultraviolett oder Infrarot). Dabei wird die Materialzugehörigkeit anhand charakteristischer Signaturen (zum Beispiel Abfolge spezifischer Absorptionsbanden) im reflektierten oder transmittierten Spektrum der elektromagnetischen Strahlung ermittelt. Die Unterscheidung der charakteristischen Signaturen wird dabei umso genauer, je mehr Charakteristika (zum Beispiel Absorptionsbanden) innerhalb der Signatur für die Unterscheidung genutzt werden. Momentan erfordert jedes Charakteristikum innerhalb der Signatur einen dedizierten Sensor innerhalb der Detektionsvorrichtung, so dass dieser nur auf das Vorhandensein/Fehlen dieses einen Charakteristikums anspricht. Je mehr Charakteristika verwendet werden sollen, desto komplexer wird die Detektionsvorrichtung. Das Eingangssignal muss entsprechend auf die Anzahl der Sensoren aufgespaltet werden und verliert dadurch an Intensität. Weiterhin gibt es für bestimmte Charakteristika derzeit keine räumlich, sondern lediglich zeitlich auflösende Sensoren. Dies erfordert eine der Detektionsvorrichtung vorgeschaltete Einrichtung, welche Zeit und Ort miteinander verknüpft. Alternativ kann die einfallende elektromagnetische Strahlung zeitlich moduliert und an die Charakteristika angepasst werden. Dies ist jedoch für den nicht-sichtbaren Bereich des elektromagnetischen Spektrums teilweise mit grossem Aufwand verbunden.

Die EP-1'961'848 A1 offenbart eine Vorrichtung zum Erkennen und Ausscheiden von Fremdstoffen aus einem Materialstrom von Rohbaumwolle. Die Vorrichtung weist eine Bestrahlungseinrichtung zum Bestrahlen des Materialstroms und eine Sensoreinrichtung zum Detektieren von bestrahlten Fremdstoffen im Materialstrom auf. Die Bestrahlungseinrichtung kann sichtbares Licht, ultraviolette oder infrarote Strahlung emittieren. Zum zeilenweisen Abscannen des Materialstroms ist ein drehbarer Polygonspiegel vorgesehen, mit welchem der Strahl der Bestrahlungseinrichtung in Richtung des Materialstroms und mit welchem der vom Materialstrom reflektierte Strahl zur Sensoreinrichtung ablenkbar ist. Die Bestrahlungseinrichtung und die Sensoreinrichtung sind koaxial bezogen auf eine optische Strahlungsachse hintereinander angeordnet. Die Bestrahlungseinrichtung besteht im Wesentlichen aus einer Strahlungsquelle, einem Hohlspiegel zum Ausrichten und Bündeln der Strahlung entlang der Strahlungsachse zum Polygonspiegel sowie einem Rückseiten-Reflektor, mit dem ein rückseitiger Teil der Strahlung in Richtung des Hohlspiegels führbar ist.

Bei der Unterscheidung des Materials anhand von Farbunterschieden, wie es im Spinnprozess üblich ist, liegen die genannten Charakteristika im sichtbaren Spektralbereich. Da der Farbeindruck ebenfalls auf die spezifische Reflexion/Transmission bestimmter Anteile des eingestrahlten Wellenlängenspektrums zurückzuführen ist, muss auch in diesem Fall jedes Charakteristikum einzeln detektiert werden. Hierzu kann entweder eine zeitliche Farbmodulation des Eingangssignals erfolgen, oder das vom Garn veränderte Ausgangssignal muss, wie bereits erläutert, in die einzelnen Charakteristika zerlegt werden. Im ersteren Fall verschlechtert sich die Ortsauflösung, im letzteren das Signal-Rausch-Verhältnis. Je mehr Farben eingesetzt werden, umso stärker wirken sich diese Nachteile aus. Deshalb haben sich in der Praxis Verfahren etabliert, die nur eine oder maximal zwei Farben einsetzen. Ein Garnreiniger, der das Garn mit mehreren verschiedenfarbigen Lichtkomponenten abtastet, ist aus der WO-2011/026249 A1 bekannt.

Multivariate optische Filter sind eine besondere Kategorie optischer Transmissionsfilter oder Reflexionsfilter. Die Filtereigenschaften der multivariaten optischen Filter werden an eine bestimmte chemische Signatur angepasst. Verschiedene Charakteristika der Signatur können gleichzeitig und unabhängig voneinander in einem einzelnen Filter genutzt werden. Multivariate optische Elemente erlauben somit die Materialidentifikation anhand der chemischen Signatur. Entspricht das Eingangssignal des Filters exakt der abgestimmten Signatur, so passiert das Signal das multivariate optische Filter ungehindert. Weicht das Eingangssignal von der Signatur ab, so wird es beim Passieren des Filters gedämpft. Je stärker die Abweichung ist, desto stärker die Dämpfung. Multivariate optische Filter ermöglichen neben der Materialunterscheidung auch die Bestimmung eines Mischungsverhältnisses auf Basis der durch die Mischung veränderten chemischen Signatur. Das spezifische Transmissions- oder Reflexionsverhalten multivariater optischer Filter wird mit Hilfe der Methode der partiellen kleinsten Quadrate aus den chemischen Signaturen der zu unterscheidenden Materialien gewonnen. Ein Beispiel für multivariate optische Filter findet sich in R. J. Priore und N. Jacksen, "Spectral imaging of chemical compounds using multivariate optically enhanced filters integrated with InGaAs VGA cameras", Proc. of SPIE Vol. 9824, S. 98240P-1 bis 98240P-10, 2016.

Die US-2017/0241839 A1 schlägt vor, zur Verbesserung der Erfassungsempfindlichkeit von optischen Rechenvorrichtungen mehrere integrierte Rechenelemente in Kombination miteinander zu verwenden. Die dort offenbarte optische Rechenvorrichtung enthält zwei oder mehr integrierte Rechenelemente, die als multivariate optische Filter ausgebildet sind. Die integrierten Rechenelemente sind identisch zueinander und wechselwirken optisch nacheinander mit einfallender elektromagnetischer Strahlung. Ferner enthält die optische Rechenvorrichtung einen Detektor, der diejenigen Photonen empfängt, die optisch mit jedem integrierten Rechenelement wechselgewirkt haben.

Aus der WO-2019/051620 A1 sind ein Messinstrument und ein entsprechendes Verfahren zum Ermitteln einer Fasermischungszusammensetzung und/oder eines Fasermischungsverhältnisses in einem Eingangsmaterial bekannt. Elektromagnetische Strahlungsquellen richten Strahlung auf das Eingangsmaterial an ersten und zweiten Stellen, und Strahlungssensoren sind zum Empfangen der transmittierten oder reflektierten Strahlung eingerichtet. Ein Steuergerät verarbeitet die Signale der Sensoren, um die Fasermischungszusammensetzung und/oder das Fasermischungsverhältnis im Eingangsmaterial zu bestimmen.

### DARSTELLUNG DER ERFINDUNG

Die Erfindung betrifft eine Vorrichtung nach Anspruch 1, ein System nach Anspruch 9 und ein Verfahren nach Anspruch 10 zur Untersuchung eines zwei Bestandteile enthaltenden textilen Fasergebildes.

Es ist die Aufgabe der vorliegenden Erfindung, ein System und eine Vorrichtung zur Untersuchung eines zwei Bestandteile enthaltenden textilen Fasergebildes zu schaffen, welche die obigen Nachteile vermeidet. Das System und die Vorrichtung sollen insbesondere einfach aufgebaut sein. Sie sollen eine hohe Ortsauflösung und die Verwendung bildgebender, räumlich auflösender Strahlungssensoren ermöglichen. Gleichzeitig soll das Signal-Rausch-Verhältnis hoch sein. Eine weitere Aufgabe besteht darin, ein entsprechendes Verfahren zur Untersuchung eines zwei Bestandteile enthaltenden textilen Fasergebildes anzugeben.

Eine weitere Aufgabe besteht darin, ein System, eine Vorrichtung und ein Verfahren zur Detektion von Fremdstoffen in einem textilen Grundmaterial anzugeben, welche die obigen Nachteile vermeiden. Eine noch weitere Aufgabe besteht darin, ein System, eine Vorrichtung und ein Verfahren zur Bestimmung eines Mischungsverhältnisses zweier Bestandteile eines textilen Fasergebildes anzugeben, welche die obigen Nachteile vermeiden.

Diese und andere Aufgaben werden durch das erfindungsgemässe System, die erfindungsgemässe Vorrichtung und das erfindungsgemässe Verfahren gelöst, wie sie in den unabhängigen Patentansprüchen definiert sind. Vorteilhafte Ausführungsformen sind in den abhängigen Patentansprüchen angegeben.

Die Erfindung beruht auf der Idee, ein Spektralfilter spezifisch in Bezug auf zwei Bestandteile des textilen Fasergebildes auszulegen, so dass eine vom Strahlungssensor empfangene Strahlungsintensität eine monotone und vorzugsweise lineare Funktion des Mischungsverhältnisses der beiden Bestandteile ist. Ausserdem soll der Transmissionsgrad oder der Reflexionsgrad im betrachteten Spektralband mindestens ein lokales Maximum und mindestens ein lokales Minimum aufweisen, so dass mehrere charakteristische Wellenlängen berücksichtigt werden. Weiterhin umfasst die Erfindung, dass das genannte Spektralfilter auch auf das Verhältnis verschiedener Charakteristika, z. B. Farbeindrücke, ausgelegt werden kann und so auch Farbunterschiede artgleicher Materialien ohne Signalverlust detektierbar macht.

Das textile Fasergebilde kann zwei oder mehr Bestandteile enthalten, wobei sich die Erfindung jeweils auf zwei bestimmte Bestandteile richtet. Die zwei Bestandteile unterscheiden sich voneinander bezüglich ihrer chemischen oder optischen Eigenschaften.

Die Auslegung des Spektralfilters erfolgt erfindungsgemäss anhand von spezifischen chemischen und/oder farblichen Signaturen der beiden Bestandteile. Charakteristika des einen Bestandteils können durch eine hohe Transmission verstärkt werden und erzeugen ein hohes Ausgangssignal, während Charakteristika des anderen Bestandteils durch niedrige Transmission gedämpft werden können und ein niedriges Ausgangssignal erzeugen. Die Kombination von Verstärkung und Dämpfung in dem Spektralfilter ermöglicht eine Unterscheidung der beiden Bestandteile anhand des aus dem Spektralfilter austretenden Signals und somit eine Untersuchung des textilen Fasergebildes bezüglich der beiden Bestandteile.

Wird das textile Fasergebilde als eine Einheit untersucht, ohne Berücksichtigung von örtlichen Inhomogenitäten, so liefert die Erfindung als Resultat den anteilsmässigen Beitrag der beiden Bestandteile, der als Mischungsverhältnis interpretiert werden kann. Somit erlaubt die Erfindung die Bestimmung eines Mischungsverhältnisses der beiden Bestandteile des textilen Fasergebildes.

Wird dagegen ein ortsauflösender Bildsensor verwendet, so kommen auf dem von ihm erzeugten Bild die örtlichen Unterschiede zwischen den beiden Bestandteilen deutlich zum Vorschein. Wenn der Anteil des einen ersten Bestandteils im textilen Fasergebilde überwiegt und der andere, zweite Bestandteil nur sporadisch vorkommt und unerwünscht ist, bezeichnet man den ersten Bestandteil als Grundmaterial und den zweiten als Fremdmaterial. Das Spektralfilter ist erfindungsgemäss so ausgelegt, dass es Charakteristika des einen Bestandteils (z. B. des Fremdmaterials) verstärkt und des anderen Bestandteils (z. B. des Grundmaterials) dämpft. Dadurch werden Fremdmaterial und Grundmaterial mit unterschiedlichen Intensitäten abgebildet, was eine gute Unterscheidung der Bestandteile und somit die Detektion des Fremdmaterials in dem Grundmaterial ermöglicht.

Das erfindungsgemässe System besteht aus einem zwei Bestandteile enthaltenden textilen Fasergebilde und einer Vorrichtung zur Untersuchung des textilen Fasergebildes. Die Vorrichtung beinhaltet eine Strahlungsquelle zum Senden von elektromagnetischer Strahlung in einem Spektralband in Richtung des textilen Fasergebildes zur Wechselwirkung mit dem textilen Fasergebilde. Ferner beinhaltet die Vorrichtung einen Strahlungssensor zum Empfangen mindestens eines Teils der elektromagnetischen Strahlung nach der Wechselwirkung mit dem textilen Fasergebilde. Die Vorrichtung beinhaltet auch ein Spektralfilter mit spektralen Eigenschaften in dem Spektralband zum Filtern mindestens eines Teils der elektromagnetischen Strahlung vor oder nach der Wechselwirkung mit dem textilen Fasergebilde. Der Transmissionsgrad oder der Reflexionsgrad des Spektralfilters in dem Spektralband weist mindestens ein lokales Maximum und mindestens ein lokales Minimum auf. Die spektralen Eigenschaften des Spektralfilters in dem Spektralband sind derart auf die spektralen Eigenschaften der Strahlungsquelle und jedes der beiden Bestandteile abgestimmt, dass eine vom Strahlungssensor empfangene Strahlungsintensität eine monotone Funktion des Mischungsverhältnisses der beiden Bestandteile ist.

Die zwei Bestandteile des textilen Fasergebildes sind zwei voneinander verschiedene Elemente aus der folgenden Menge: Baumwolle, Leinen, Schurwolle, Polyethylen (PE), Polypropylen (PP), Polyvinylchlorid (PVC), Polyester (PES), Polyacryl (PAN), Viskose (CV, regenerierte Zellulose), Modal (CMD), Lyocell (CLY), Polyethylenterephthalat (PET), Polystyrol (PS), Polyamid (PA), Acrylnitril-Butadien-Styrol-Copolymer (ABS), Polymethylmethacrylat (PMMA), Polyoxymethylen (POM), Elastan (EL), Aramid (AR), Acetat (CA), Cupro (CUP), ausgenommen das Paar Baumwolle und Polyethylen (PE).

Vorzugsweise sind die zwei Bestandteile des textilen Fasergebildes ein Paar aus der folgenden Menge: Baumwolle und Polypropylen (PP), Baumwolle und Polyvinylchlorid (PVC), Baumwolle und Polyester (PES), Baumwolle und Polyacryl (PAN), Baumwolle und Viskose (CV, regenerierte Zellulose), Baumwolle und Polyethylenterephthalat (PET), Baumwolle und Polystyrol (PS), Baumwolle und Polyamid (PA), Baumwolle und Acrylnitril-Butadien-Styrol-Copolymer (ABS), Baumwolle und Polymethylmethacrylat (PMMA), Baumwolle und Polyoxymethylen (POM).

Die erfindungsgemässe Vorrichtung dient zur Untersuchung eines zwei Bestandteile enthaltenden textilen Fasergebildes. Die Vorrichtung beinhaltet eine Strahlungsquelle zum Senden von elektromagnetischer Strahlung in einem Spektralband in Richtung des textilen Fasergebildes zur Wechselwirkung mit dem textilen Fasergebilde. Ferner beinhaltet die Vorrichtung einen Strahlungssensor zum Empfangen mindestens eines Teils der elektromagnetischen Strahlung nach der Wechselwirkung mit dem textilen Fasergebilde. Die Vorrichtung beinhaltet auch ein Spektralfilter mit spektralen Eigenschaften in dem Spektralband zum Filtern mindestens eines Teils der elektromagnetischen Strahlung vor oder nach der Wechselwirkung mit dem textilen Fasergebilde. Die zwei Bestandteile des textilen Fasergebildes sind zwei voneinander verschiedene Elemente aus der folgenden Menge: Baumwolle, Leinen, Schurwolle, Polyethylen (PE), Polypropylen (PP), Polyvinylchlorid (PVC), Polyester (PES), Polyacryl (PAN), Viskose (CV, regenerierte Zellulose), Modal (CMD), Lyocell (CLY), Polyethylenterephthalat (PET), Polystyrol (PS), Polyamid (PA), Acrylnitril-Butadien-Styrol-Copolymer (ABS), Polymethylmethacrylat (PMMA), Polyoxymethylen (POM), Elastan (EL), Aramid (AR), Acetat (CA), Cupro (CUP), ausgenommen das Paar Baumwolle und Polyethylen (PE). Der Transmissionsgrad oder der Reflexionsgrad des Spektralfilters in dem Spektralband weist mindestens ein lokales Maximum und mindestens ein lokales Minimum auf. Die spektralen Eigenschaften des Spektralfilters in dem Spektralband sind derart auf die spektralen Eigenschaften der Strahlungsquelle und jedes der beiden Bestandteile abgestimmt, dass eine vom Strahlungssensor empfangene Strahlungsintensität eine monotone Funktion des Mischungsverhältnisses der beiden Bestandteile ist.

In einer Ausführungsform der Vorrichtung sind die zwei Bestandteile des textilen Fasergebildes ein Paar aus der folgenden Menge: Baumwolle und Polypropylen (PP), Baumwolle und Polyvinylchlorid (PVC), Baumwolle und Polyester (PES), Baumwolle und Polyacryl (PAN), Baumwolle und Viskose (CV, regenerierte Zellulose), Baumwolle und Polyethylenterephthalat (PET), Baumwolle und Polystyrol (PS), Baumwolle und Polyamid (PA), Baumwolle und Acrylnitril-Butadien-Styrol-Copolymer (ABS), Baumwolle und Polymethylmethacrylat (PMMA), Baumwolle und Polyoxymethylen (POM).

In einer Ausführungsform des Systems bzw. der Vorrichtung liegt das mindestens eine lokale Maximum bei derjenigen Wellenlänge bzw. denjenigen Wellenlängen der elektromagnetischen Strahlung, bei welcher bzw. bei welchen der Absolutwert der Differenz der Absorptionsgrade, der Transmissionsgrade oder der Reflexionsgrade der beiden Bestandteile ein lokales Maximum aufweist.

In einer Ausführungsform des Systems bzw. der Vorrichtung weist der Transmissionsgrad oder der Reflexionsgrad des Spektralfilters in dem Spektralband mindestens je zwei lokale Maxima und lokale Minima auf.

Das Spektralfilter kann beim System bzw. bei der Vorrichtung als Reflexionsfilter oder als Transmissionsfilter ausgebildet sein.

In einer Ausführungsform des Systems bzw. der Vorrichtung ist das Spektralfilter als Interferenzfilter ausgebildet.

In einer Ausführungsform des Systems bzw. der Vorrichtung ist das Spektralfilter in den Strahlungssensor integriert.

In einer Ausführungsform des Systems bzw. der Vorrichtung sind die spektralen Eigenschaften des Spektralfilters in dem Spektralband derart auf die spektralen Eigenschaften der Strahlungsquelle und jedes der beiden Bestandteile abgestimmt, dass eine vom Strahlungssensor empfangene Strahlungsintensität eine lineare Funktion des Mischungsverhältnisses der beiden Bestandteile ist.

Eine Ausführungsform des Systems bzw. der Vorrichtung beinhaltet ein optisches Abbildungssystem zur Abbildung des textilen Fasergebildes auf den Strahlungssensor, wobei der Strahlungssensor ortsauflösend und entweder als digitale Kamera mit einem zweidimensionalen Bildwandler oder als eindimensionaler Zeilensensor ausgebildet ist.

Eine Ausführungsform des Systems bzw. der Vorrichtung beinhaltet ein zeitlich veränderliches optisches Abbildungssystem, welches verschiedene Stellen des textilen Fasergebildes zeitlich nacheinander auf den Strahlungssensor abbildet, wobei der Strahlungssensor zeitauflösend ist (vgl. EP-1'961'848 A1).

Das erfindungsgemässe System bzw. die erfindungsgemässe Vorrichtung kann zur Detektion eines Fremdmaterials in einem Grundmaterial verwendet werden, wobei das Fremdmaterial und das Grundmaterial die zwei Bestandteile des textilen Fasergebildes sind.

Das erfindungsgemässe System bzw. die erfindungsgemässe Vorrichtung kann zur Bestimmung eines Mischungsverhältnisses der zwei Bestandteile des textilen Fasergebildes verwendet werden.

Das erfindungsgemässe Verfahren dient zur Untersuchung eines zwei Bestandteile enthaltenden textilen Fasergebildes. Elektromagnetische Strahlung in einem Spektralband wird von einer Strahlungsquelle in Richtung des textilen Fasergebildes gesendet. Mindestens ein Teil der elektromagnetischen Strahlung wechselwirkt mit dem textilen Fasergebilde. Mindestens ein Teil der elektromagnetischen Strahlung wird nach der Wechselwirkung mit dem textilen Fasergebilde von einem Strahlungssensor empfangen. Mindestens ein Teil der elektromagnetischen Strahlung wird vor oder nach der Wechselwirkung mit dem textilen Fasergebilde von einem Spektralfilter mit spektralen Eigenschaften in dem Spektralband gefiltert. Das Spektralfilter wird derart gewählt, dass sein Transmissionsgrad oder sein Reflexionsgrad in dem Spektralband mindestens ein lokales Maximum und mindestens ein lokales Minimum aufweist und seine spektralen Eigenschaften in dem Spektralband derart auf die spektralen Eigenschaften der Strahlungsquelle und jedes der beiden Bestandteile im textilen Fasergebilde abgestimmt sind, dass eine vom Strahlungssensor empfangene Strahlungsintensität eine monotone Funktion des Mischungsverhältnisses der beiden Bestandteile ist.

Die zwei Bestandteile des textilen Fasergebildes sind zwei voneinander verschiedene Elemente aus der folgenden Menge: Baumwolle, Leinen, Schurwolle, Polyethylen (PE), Polypropylen (PP), Polyvinylchlorid (PVC), Polyester (PES), Polyacryl (PAN), Viskose (CV, regenerierte Zellulose), Modal (CMD), Lyocell (CLY), Polyethylenterephthalat (PET), Polystyrol (PS), Polyamid (PA), Acrylnitril-Butadien-Styrol-Copolymer (ABS), Polymethylmethacrylat (PMMA), Polyoxymethylen (POM), Elastan (EL), Aramid (AR), Acetat (CA), Cupro (CUP) , ausgenommen das Paar Baumwolle und Polyethylen (PE).

Vorzugsweise sind die zwei Bestandteile des textilen Fasergebildes ein Paar aus der folgenden Menge: Baumwolle und Polypropylen (PP), Baumwolle und Polyvinylchlorid (PVC), Baumwolle und Polyester (PES), Baumwolle und Polyacryl (PAN), Baumwolle und Viskose (CV, regenerierte Zellulose), Baumwolle und Polyethylenterephthalat (PET), Baumwolle und Polystyrol (PS), Baumwolle und Polyamid (PA), Baumwolle und Acrylnitril-Butadien-Styrol-Copolymer (ABS), Baumwolle und Polymethylmethacrylat (PMMA), Baumwolle und Polyoxymethylen (POM).

Das erfindungsgemässe Verfahren kann zur Detektion eines Fremdmaterials in einem Grundmaterial angewendet werden, wobei das Fremdmaterial und das Grundmaterial die zwei Bestandteile des textilen Fasergebildes sind.

Das erfindungsgemässe Verfahren kann zur Bestimmung eines Mischungsverhältnisses der zwei Bestandteile des textilen Fasergebildes angewendet werden.

Beim System, bei der Vorrichtung bzw. beim Verfahren kann das Spektralband z. B. im Wellenlängenbereich zwischen 300 nm und 2200 nm liegen. Das Spektralband kann jedoch beliebig gewählt werden, wenn entsprechende Fertigungsverfahren für das multivariate Filter zur Verfügung stehen. Für die Untersuchung von Materialpaarungen mit dem Grundstoff Baumwolle und Fremdstoffen wie Polyester, Polyacryl, Polypropylen und Polyethylen hat sich der Wellenlängenbereich zwischen 700 nm und 1900 nm als vorteilhaft erwiesen.

Beim System, bei der Vorrichtung bzw. beim Verfahren kann das Spektralband z. B. eine Breite zwischen 100 nm und 1500 nm und vorzugsweise zwischen 300 nm und 500 nm haben.

Das textile Fasergebilde kann z. B. in Form von Faserflocken, Faservlies, Faserband, Vorgarn, Garn, Gewebe, oder Gestrick vorliegen.

Die erfindungsgemässe Vorrichtung kann z. B. inline in einer textilen Produktionsanlage, bspw. als Faserreiniger oder als Garnreiniger, oder offline in einem Textillabor, bspw. als Faserprüfgerät oder als Garnprüfgerät, eingesetzt werden. Analoges gilt für das erfindungsgemässe Verfahren.

Die Strahlungsquelle kann ein einziges Strahlungselement, z. B. eine Halogenlampe, beinhalten. Alternativ kann sie mehrere Strahlungselemente beinhalten, z. B. eine Halogenlampe und eine Quecksilberdampflampe.

Das Spektralfilter kann erfindungsgemäss in Transmission oder in Reflexion verwendet werden. Es können ein einziges oder mehrere Spektralfilter in Kombination miteinander (vgl. US-2017/0241839 A1) verwendet werden.

Die in dieser Schrift verwendeten Ausdrücke «lokales Maximum», «lokales Minimum» und «monotone Funktion» werden im Sinne ihrer jeweiligen mathematischen Bedeutungen verwendet. Sie sind dem Fachmann bekannt, und ihre Definitionen können Lehr- oder Nachschlagewerken zur Mathematik entnommen werden.

Das erfindungsgemässe System, die erfindungsgemässe Vorrichtung und das erfindungsgemässe Verfahren erlauben eine einfache und dennoch zuverlässige Bestimmung eines Mischungsverhältnisses zweier Bestandteile eines textilen Fasergebildes. Sie vermeiden eine Aufspaltung der eintreffenden, vom textilen Fasergebilde reflektieren oder transmittierten, elektromagnetischen Strahlung auf mehrere Strahlungssensoren. Das System und die Vorrichtung sind einfach aufgebaut und erlauben die Verwendung bildgebender, räumlich auflösender Strahlungssensoren. Sie kommen ohne eine zeitliche Modulation des Eingangssignals aus, wodurch eine hohe Ortsauflösung erreicht wird.

Ausserdem hat sich überraschenderweise gezeigt, dass dieselbe erfindungsgemässe Vorrichtung für verschiedene Fremdmaterialien verwendet werden kann. Viele der in der in natürlichen textilen Grundmaterialien wie Baumwolle vorkommenden Fremdmaterialien wie Polystyrol, Polyethylen oder Polypropylen können mit ein und derselben erfindungsgemässen Vorrichtung detektiert werden, sofern ein geeignetes Spektralband gewählt wird. Somit braucht nicht für jedes Fremdmaterial eigens ein dediziertes Spektralfilter entworfen und gebaut zu werden; ebenso genügen eine einzige Strahlungsquelle, ein einziger Strahlungssensor und ein einziges Spektralband.

### AUFZÄHLUNG DER ZEICHNUNGEN

Nachfolgend wird eine Ausführungsform der Erfindung anhand der Zeichnungen detailliert erläutert. Zur anschaulicheren Darstellung wird dabei eine Anwendung beschrieben, in der ein Anteil eines Fremdmaterials in einem Grundmaterial eines textilen Fasergebildes ermittelt wird. Dies soll jedoch die Allgemeinheit der Erfindung nicht einschränken. Die Erfindung kann alternativ auf ein textiles Fasergebilde mit zwei erwünschten Bestandteilen gerichtet sein. Die Erfindung kann sich auf die Detektion eines Fremdmaterials in einem Grundmaterial oder auf die Bestimmung eines Mischungsverhältnisses zweier Bestandteile des textilen Fasergebildes beziehen.
- Figur 1: zeigt schematisch eine Ausführungsform des erfindungsgemässen Systems und der erfindungsgemässen Vorrichtung.
- Figur 2: zeigt verschiedene Spektren in einem gemeinsamen ersten Spektralband, nämlich: (a) relative Intensitätsverteilung einer Halogenlampe; (b) Absorptionsgrad von Baumwolle; (c) Absorptionsgrad von Polyethylen; und (d) Transmissionsgrad eines Spektralfilters.
- Figur 3: zeigt eine relative Intensitätsverteilung einer Halogenlampe in einem zweiten Spektralband.
- Figuren 4-10: zeigen Absorptionsgrade der Materialien Baumwolle, Polyethylen, Polypropylen, Polyester, Polyethylenterephthalat, Polyacryl bzw. Zellulose in dem zweiten Spektralband.
- Figur 11: zeigt einen Transmissionsgrad eines Spektralfilters in dem zweiten Spektralband.
- Figur 12: zeigt (a) ein Graustufenbild einer textilen Probe mit verschiedenen Materialien und (b) ein Binärbild der Probe nach Ausführung des erfindungsgemässen Verfahrens und Bildbearbeitung.

### AUSFÜHRUNG DER ERFINDUNG

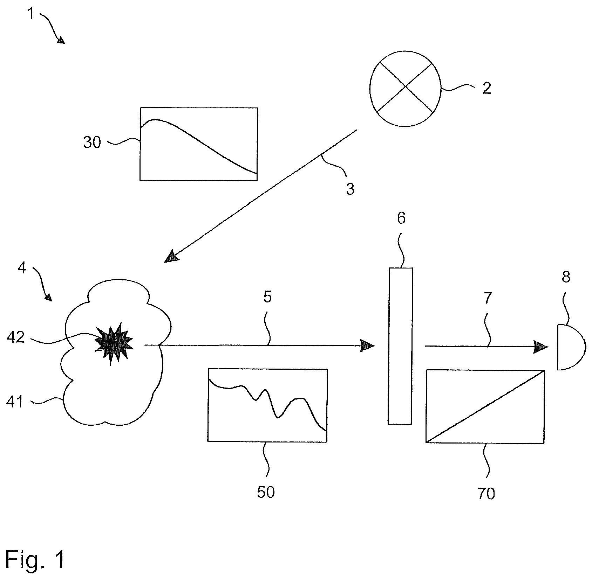

Eine ausführungsform des erfindungsgemässen Systems und der erfindungsgemässen Vorrichtung 1 ist schematisch in **Figur 1** dargestellt. Die Vorrichtung 1 beinhaltet eine breitbandige Strahlungsquelle 2 zur Erzeugung elektromagnetischer Strahlung 3 in einem Spektralband. Die erzeugte elektromagnetische Strahlung 3 hat in dem Spektralband eine für die Strahlungsquelle 2 charakteristische spektrale Intensitätsverteilung 30. In Figur 1 ist die Intensitätsverteilung 30 als schematisches Diagramm dargestellt, in welchem die Intensität als Funktion der Wellenlänge aufgetragen ist.

Mindestens ein Teil der von der Strahlungsquelle 2 erzeugten elektromagnetischen Strahlung 3 trifft auf ein zu untersuchendes textiles Fasergebilde 4 auf. Das textile Fasergebilde 4 kann z. B. eine oder mehrere Faserflocken, ein Faservlies, ein Faserband, ein Vorgarn, ein Garn, ein Gewebe, ein Gestrick oder ein Vlies sein. Im Beispiel von Figur 1 ist ohne Einschränkung der Allgemeinheit als textiles Fasergebilde 4 schematisch eine Faserflocke eingezeichnet.

Das textile Fasergebilde 4 beinhaltet mindestens zwei verschiedene Bestandteile 41, 42. Ohne Einschränkung der Allgemeinheit wird hier zur Illustration angenommen, das textile Fasergebilde 4 bestehe aus einem Grundmaterial 41, z. B. Baumwolle, und könne unter Umständen ein oder mehrere Fremdmaterialien 42 enthalten, die sich vom Grundmaterial 41 unterscheiden. Das Fremdmaterial 42 kann z. B. Polyethylen sein. Beim Auftreffen der elektromagnetischen Strahlung 3 auf das textile Fasergebilde 4 kommt es zu einer Wechselwirkung der elektromagnetischen Strahlung 3 mit dem Grundmaterial 41 und, falls vorhanden, dem Fremdmaterial 42. Durch die Wechselwirkung wird die spektrale Intensitätsverteilung 30 der elektromagnetischen Strahlung 3 gemäss der chemischen bzw. farblichen Charakteristik der Materialien verändert. Am textilen Fasergebilde 4 reflektierte oder transmittierte Strahlung 5 hat somit eine spektrale Intensitätsverteilung 50, die sich von der Intensitätsverteilung 30 der auf das textile Fasergebilde 4 auftreffenden Strahlung 3 unterscheidet. Die Intensitätsverteilung 50 der reflektierten oder transmittierten Strahlung 5 ist in Figur 1 wiederum als schematisches Diagramm dargestellt, in welchem die Intensität als Funktion der Wellenlänge aufgetragen ist.

Nach der Wechselwirkung mit dem textilen Fasergebilde 4 wechselwirkt die elektromagnetische Strahlung 5 im Ausführungsbeispiel von Figur 1 mit einem Spektralfilter 6. Die Wechselwirkung kann mittels Transmission oder Reflexion am Spektralfilter 6 erfolgen. Die spektralen Eigenschaften des Spektralfilters 6 sind speziell auf das Grundmaterial 41, einen Typ oder eine Klasse von Fremdmaterialien 42 und das betreffende Spektralband abgestimmt. Das Spektralfilter 6 kann z. B. als Interferenzfilter ausgebildet sein. Es verändert die Intensitätsverteilung 50 der mit ihm wechselwirkenden elektromagnetischen Strahlung 5 so, dass Unterschiede zwischen dem Grundmaterial 41 und dem Fremdmaterial 42 verstärkt werden.

Entspricht die spektrale Intensitätsverteilung 50 vor dem Spektralfilter 6 jener des Grundmaterials 41, so soll die Intensität einer Strahlung 7 nach dem Spektralfilter 6 z. B. minimal sein. Entspricht die spektrale Intensitätsverteilung 50 vor dem Spektralfilter 6 dagegen jener des Fremdmaterials 42, so soll die Intensität der Strahlung 7 nach dem Spektralfilter 6 z. B. maximal sein. Besitzt die spektrale Intensitätsverteilung 50 vor dem Spektralfilter 6 Charakteristika beider Materialien 41 und 42, so soll die die Intensität der Strahlung 7 nach dem Spektralfilter 6 einer monotonen und vorzugsweise linearen Funktion des Mischungsverhältnisses der Materialien 41 und 42 entsprechen. Dies ist in Figur 1 schematisch durch ein Diagramm 70 dargestellt, das eine Intensität der Strahlung 7 nach Wechselwirkung mit dem Spektralfilter 6 als lineare Funktion des Anteils an Fremdmaterialien 42 im textilen Fasergebilde 4 zeigt.

Das Spektralfilter 6 wandelt somit die auftreffende wellenlängenabhängige Intensitätsverteilung 50 in eine Intensitätsverteilung 70 um, die eine monotone und vorzugsweise lineare Funktion des Mischungsverhältnisses der beiden Bestandteile 41 und 42 ist. Die Intensität der nach dem Spektralfilter 6 vorliegenden elektromagnetischen Strahlung 7 ist also ein Mass für das Mischungsverhältnis. Im hier diskutierten Beispiel ist sie ein Mass für die Präsenz und Menge des Fremdmaterials 42 im textilen Fasergebilde 4 und/oder für den Grad der Farbabweichung zwischen dem Grundmaterial 41 und dem Fremdmaterial 42.

Nach der Wechselwirkung mit dem Spektralfilter 6 wird elektromagnetische Strahlung 7 von einem breitbandigen Strahlungssensor 8 detektiert, der jedenfalls Strahlung 7 im betreffenden Spektralband zu detektieren vermag. Der Strahlungssensor 8 ist vorzugsweise ortsauflösend und zeitauflösend. Er kann z. B. als digitale Kamera oder als digitaler Zeilensensor ausgebildet sein.

Ist der Strahlungssensor 8 nicht ortsauflösend, so ist die von ihm empfangene Strahlungsintensität ein Mass für das Mischungsverhältnis der beiden Bestandteile 41, 42 des textilen Fasergebildes 4, gemäss dem Diagramm 70.

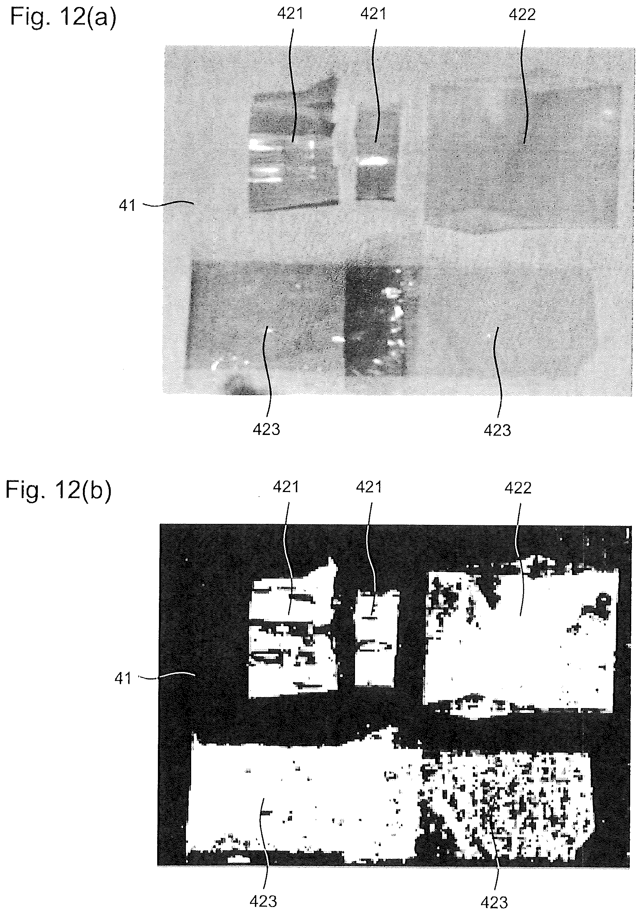

In einer bevorzugten Ausführungsform ist der Strahlungssensor 8 ortsauflösend, und das textile Fasergebilde 4 wird mittels einer (nicht eingezeichneten) Optik auf den Strahlungssensor 8 abgebildet. Dadurch erhält man auch Information über Anzahl, Lage, Grösse und Form der im textilen Fasergebilde 4 vorhandenen Fremdmaterialien 42. Somit können die Fremdmaterialien 42 im textilen Fasergebilde 4 detektiert und lokalisiert werden. In einem vom Strahlungssensor 8 aufgenommenen Bild des textilen Fasergebildes 4 erscheinen im vorliegenden Beispiel Fremdmaterialien 42 hell vor einem dunklen Hintergrund; vgl. Figur 12(b).

In einer alternativen Ausführungsform können die spektralen Eigenschaften des Spektralfilters 6 derart auf die Strahlungsquelle 2, das Grundmaterial 41 und/oder das Fremdmaterial 42 abgestimmt sein, dass die Intensität der Strahlung 7 nach dem Spektralfilter 6 maximal ist, wenn das textile Fasergebilde 4 nur aus dem Grundmaterial 41 besteht, und mit zunehmendem Anteil an Fremdmaterial 42 abnimmt. In diesem Fall erscheinen Fremdmaterialien 42 dunkel vor einem hellen Hintergrund.

In einer anderen Ausführungsform kann das Spektralfilter 6 im Strahlengang zwischen der Strahlungsquelle 2 und dem textilen Fasergebilde 4 eingesetzt sein. Diesfalls wechselwirkt die von der Lichtquelle 2 erzeugte elektromagnetische Strahlung 3 zuerst mit dem Spektralfilter 6 und trifft danach auf das textile Fasergebilde 4 auf. Die Wirkung ist analog, und ein vom Strahlungssensor 8 aufgenommenes Bild des textilen Fasergebildes 4 entspricht im Wesentlichen den gemäss den oben beschriebenen Ausführungsformen aufgenommenen Bildern.

Die Vorrichtung 1 kann dem Fachmann bekannte optische Elemente wie Linsen, Spiegel, Blenden etc. zur Beeinflussung der Strahlung 3, 5, 7 beinhalten. Solche sind der Einfachheit halber in Figur 1 nicht eingezeichnet.

In einer Ausführungsform beinhaltet die Vorrichtung 1 ein zeitlich veränderliches optisches Abbildungssystem, welches verschiedene Stellen des textilen Fasergebildes 4 zeitlich nacheinander auf den Strahlungssensor 8 abbildet. Dies kann mechanisch oder elektronisch verwirklicht sein. Ein Beispiel für ein solches zeitlich veränderliches optisches Abbildungssystem ist in der EP-1'961'848 A1 angegeben und beinhaltet einen rotierbaren Polygonspiegel zum zeilenweisen Abscannen des textilen Fasergebildes 4. Diese Ausführungsform benötigt einen zeitauflösenden Strahlungssensor 8 und eine Einrichtung zum Zuordnen der Empfangszeit zum entsprechenden Ort auf dem textilen Fasergebilde 4. Dafür braucht der Strahlungssensor 8 nicht ortsauflösend zu sein.

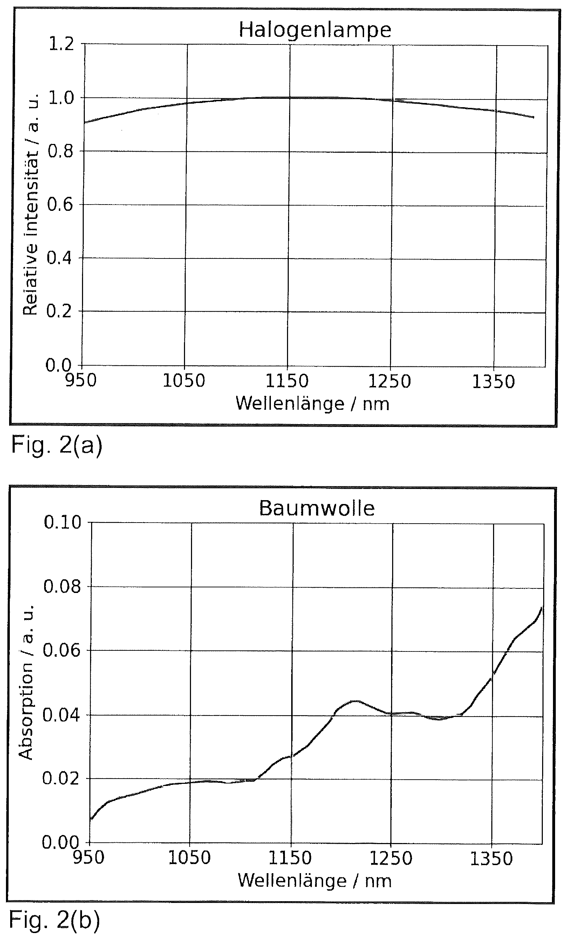

In **Figur 2(a)** ist beispielhaft die relative Intensität der von einer Halogenlampe 2 erzeugten elektromagnetischen Strahlung 3 als Funktion der Strahlungswellenlänge λ aufgetragen. Im dargestellten ersten Spektralband (950 nm ≤ λ ≤ 1400 nm, nahes und kurzwelliges Infrarot) nimmt die relative Intensität monoton mit der Strahlungswellenlänge λ ab. In einem anderen Spektralband oder bei anderen Lichtquellen 2 kann das Intensitätsspektrum einen anderen Verlauf aufweisen.

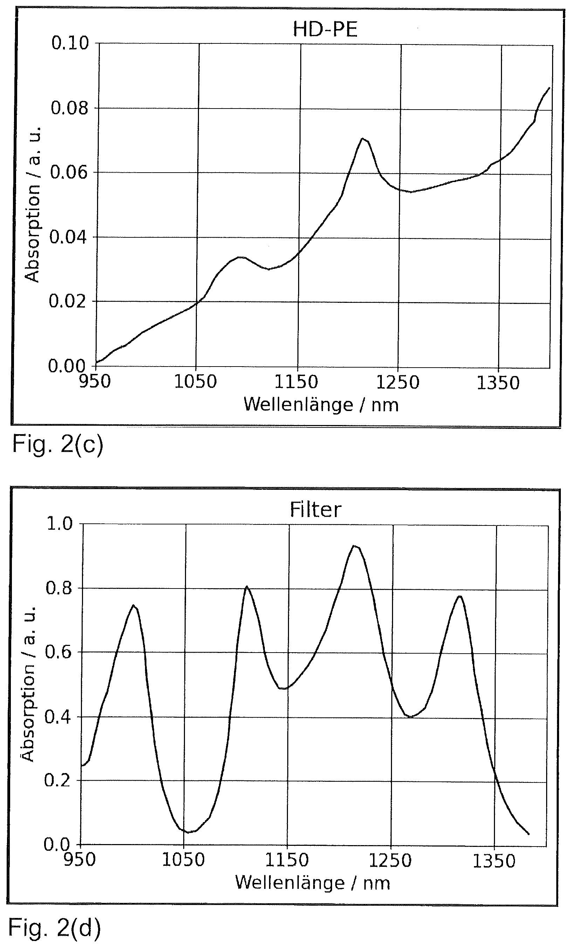

**Figuren 2(b)** **und** **2(c)** zeigen Absorptionsspektren von Baumwolle, die ein typisches textiles Grundmaterial 41 darstellt, bzw. Polyethylen, das ein Fremdmaterial 42 sein kann. Der jeweilige Absorptionsgrad ist wiederum als Funktion der Strahlungswellenlänge λ im selben Spektralband wie in Figur 2(a) aufgetragen.

Die spektralen Eigenschaften des Spektralfilters 6 werden aus der spektralen Intensitätsverteilung 30 der Strahlungsquelle 2 sowie aus spektralen Eigenschaften - Absorptionsgrad, Reflexionsgrad und/oder Transmissionsgrad - des Grundmaterials 41 und des zu detektierenden Fremdmaterials 42 durch mehrdimensionale Variationsrechnung ermittelt. Der aus der mehrdimensionalen Variationsrechnung resultierende Regressionsvektor enthält für jede Wellenlänge im betrachteten Spektralband eine Gewichtung. Die Gewichtungen entsprechen dem Transmissions- bzw. Reflexionsgrad des

Spektralfilters 6 für die betreffenden Wellenlängen. Somit ist das Spektralfilter 6 für die Detektion eines bestimmten Fremdmaterials 42 in einem bestimmten Grundmaterial 41 und für die Bestimmung des Mischungsverhältnisses der beiden Materialien 41, 42 bei Beleuchtung mit einer bestimmten Strahlungsquelle 2 optimiert. Solche Verfahren für den Entwurf eines Spektralfilters sind an sich bekannt; ein Beispiel findet sich im Artikel «PLS-regression: a basic tool of chemometrics» von S. Wolda, M. Sjöströma und L. Eriksson, Chemometrics and Intelligent Laboratory Systems, Band 58, Heft 2, 28. Oktober 2001, Seiten 109-130.

In **Figur 2(d)** ist ein beispielhafter Transmissionsgrad eines Spektralfilters 6 als Funktion der Strahlungswellenlänge λ im selben Spektralband wie in den Figuren 2(a)-2(c) aufgetragen. Im dargestellten Beispiel hat das Spektralfilter 6 im betrachteten Spektralband (950 nm ≤ λ ≤ 1400 nm) vier lokale Maxima (bei Wellenlängen von ca. λ ≈ 1000 nm, 1110 nm, 1213 nm und 1317 nm) und drei lokale Minima (bei Wellenlängen von ca. λ ≈ 1055 nm, 1145 nm und 1268 nm). Das Spektralfilter 6 verstärkt die die Unterschiede in der Absorption von Baumwolle (Figur 2(b)) und Polyethylen (Figur 2(c)), was insbesondere bei den Wellenlängen von ca. λ ≈ 1100 nm, 1210 nm und 1320 nm an den betreffenden Spektren erkennbar ist.

Die Transmission bzw. Reflexion des Spektralfilters 6 ist für die zwei Bestandteile 41, 42 des textilen Fasergebildes 4 optimiert. Dadurch können diejenigen Anteile der auf das Spektralfilter 6 einfallenden elektromagnetischen Strahlung 5, die aus der Wechselwirkung der Strahlung 5 mit dem Fremdmaterial 42 resultieren, das Spektralfilter 6 ungedämpft passieren. Anteile, die vom Grundmaterial 41 resultieren, werden vom Spektralfilter 6 gedämpft. Das Signal auf dem Strahlungssensor 8 ist somit hoch für das Fremdmaterial 42 und niedrig für das Grundmaterial 41. Ist der Strahlungssensor 8 als Bildsensor ausgebildet, so erscheinen auf dem vom Strahlungssensor 8 generierten Bild das Fremdmaterial 42 als helle Bildbereiche und das Grundmaterial 41 als dunkle Bildbereiche; vgl. Figur 12(b).

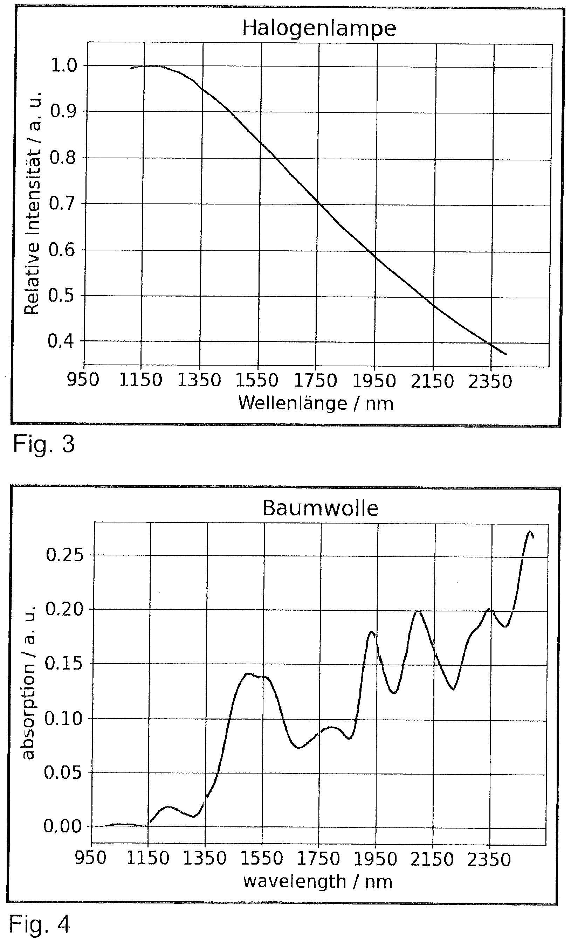

In **Figur 3** ist die relative Intensität der von einer Halogenlampe 2 erzeugten elektromagnetischen Strahlung 3 als Funktion der Strahlungswellenlänge λ aufgetragen, und zwar in einem zweiten Spektralband (ca. 1000 nm ≤ λ ≤ 2400 nm, nahes und kurzwelliges Infrarot), das sich vom ersten Spektralband der Figur 2 unterscheidet.

Die **Figuren 4-10** zeigen Absorptionsgrade der Materialien Baumwolle, Polyethylen, Polypropylen, Polyester, Polyethylenterephthalat, Polyacryl bzw. Viskose (regenerierte Zellulose) in dem zweiten Spektralband.

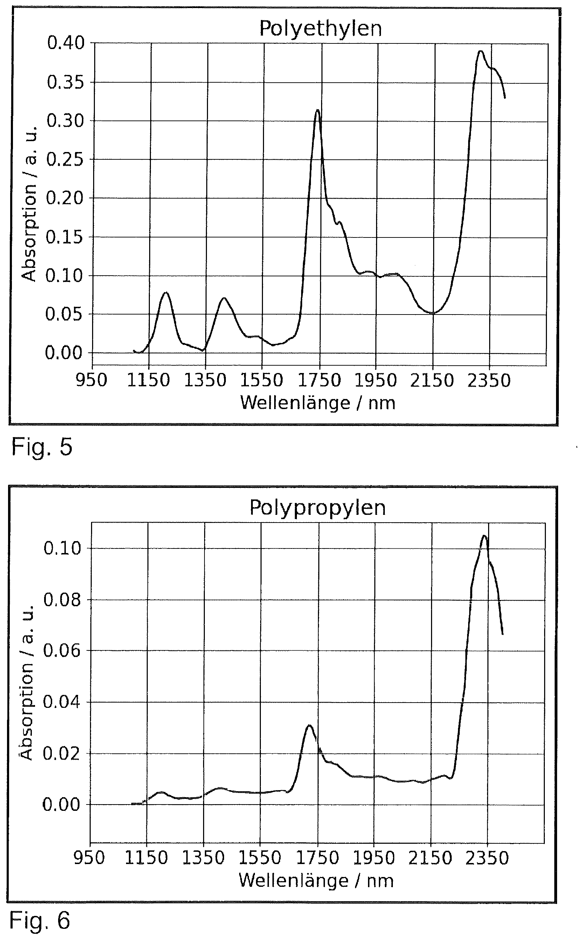

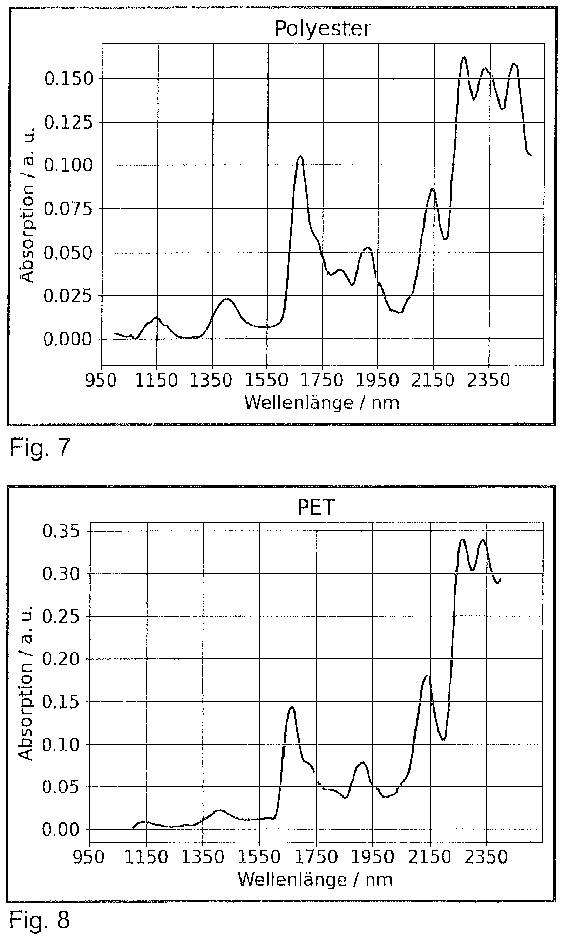

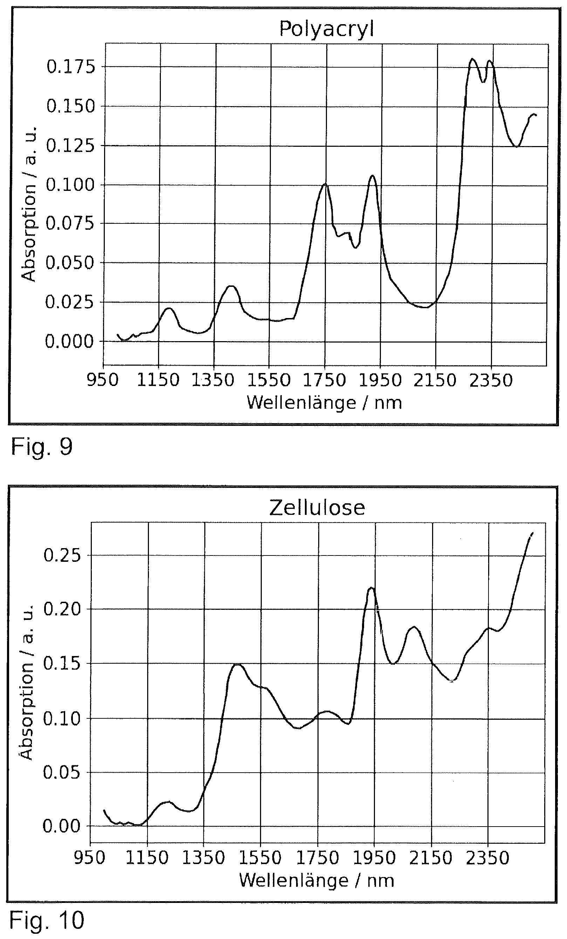

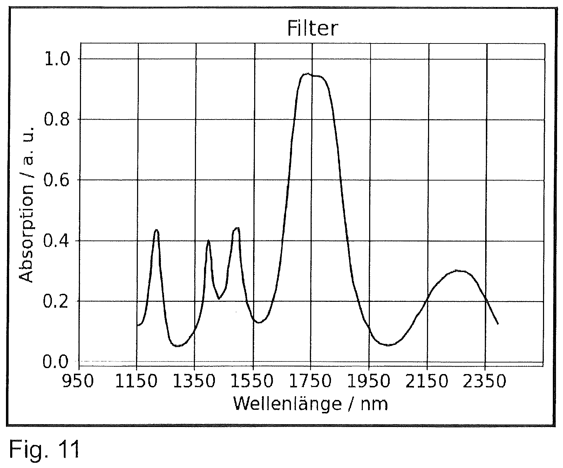

In **Figur 11** ist ein beispielhafter Transmissionsgrad eines Spektralfilters 6 als Funktion der Strahlungswellenlänge λ im zweiten Spektralband aufgetragen. Dieses beispielhafte Spektralfilter 6 hat im betrachteten zweiten Spektralband (ca. 1000 nm ≤ λ ≤ 2400 nm) fünf lokale Maxima (bei Wellenlängen von ca. λ ≈ 1210 nm, 1400 nm, 1500 nm, 1720 nm und 2260 nm) und vier lokale Minima (bei Wellenlängen von ca. λ ≈ 1290 nm, 1440 nm, 1570 nm und 2030 nm). Das Spektralfilter 6 von Figur 11 ist für Baumwolle (Figur 4) als Grundmaterial 41 und Polyethylen (Figur 5), Polypropylen (Figur 6), Polyester (Figur 7), Polyethylenterephthalat (Figur 8), Polyacryl (Figur 9) oder Polystyrol als Fremdmaterial 42 entworfen. Eine solche Verwendung ein und desselben Spektralfilters 6 für zwei oder mehr verschiedene Materialien 42 ist möglich, sofern die Spektren der Materialien 42 im betrachteten Spektralband ähnliche Charakteristika haben. Dies ist für die genannten Fremdmaterialien 42 der Fall: Wie die Figuren 5-9 zeigen, haben die Absorptionsspektren all dieser Fremdmaterialien 42 ausgeprägte lokale Maxima in der Nähe der Wellenlängen λ ≈ 1700 nm und λ ≈ 2300 nm, im Gegensatz zum betrachteten Grundmaterial 41 Baumwolle (Figur 4). Dementsprechend weist das Spektralfilter 6 von Figur 11 ein ausgeprägtes lokales Maximum in der Nähe von λ ≈ 1700 nm und ein weiteres lokales Maximum in der Nähe von λ ≈ 2300 nm auf.

**Figur 12(a)** zeigt ein Graustufenbild einer textilen Probe mit verschiedenen darauf gelegten Materialien, aufgenommen mit Infrarotstrahlung im Spektralband zwischen 1100 nm bis 1700 nm. Das Grundmaterial 41 der Probe ist ein Gestrick aus Baumwolle. Darauf liegen Folienstücke aus den folgenden Fremdmaterialien: Polystyrol 421, Polyethylen 422 und Polypropylen 423. Die Folienstücke 421, 422, 423 sind im betreffenden Spektralband durchsichtig und deshalb im Graustufenbild von Figur 12(a) schlecht sichtbar. Umso weniger sind sie in der Praxis auf einer fotografischen Aufnahme im sichtbaren oder NIR-Spektralbereich zu erkennen. Im Unterschied zu Figur 12(a) ist im Anwendungsbeispiel eines Faserreinigungsgeräts in der Putzerei das Grundmaterial 41 nicht ein gleichmässiges, ebenes Gestrick, sondern eine dreidimensionale Faserflocke mit diversen Schattenwürfen, und das Fremdmaterial 42 ist nicht eine grossflächige, ebene Folie, sondern ein faserartiges Schnipsel. Hier schafft die Erfindung Abhilfe.

**Figur 12(b)** zeigt ein Bild der textilen Probe von Figur 12(a), das von einer Kamera 8 der erfindungsgemässen Vorrichtung 1 (siehe Figur 1) aufgenommen und nachträglich digital bearbeitet wurde. Die verwendete Strahlungsquelle 2 war eine Halogenlampe mit einem Emissionsspektrum gemäss Figur 3. Das verwendete Spektralfilter 6 entsprach demjenigen von Figur 11. Bereits auf der (nicht gezeigten) unbearbeiteten fotografischen Aufnahme sind die Fremdmaterialien 421, 422, 423 deutlich als helle Flächen vor dunklem Hintergrund zu sehen. Um die Unterschiede zwischen dem Grundmaterial 41 und den Fremdmaterialien 421, 422, 423 weiter zu verstärken, wurde das Bild einer einfachen digitalen Bildbearbeitung unterworfen, indem ein Helligkeitsschwellwert definiert wurde, unterhalb dessen die Pixel auf «schwarz» und oberhalb dessen die Pixel auf «weiss» gesetzt wurden. So entstand das Binärbild von Figur 12(b), auf dem sich die Fremdmaterialien 421, 422, 423 klar vom Grundmaterial 41 abheben.

Bemerkenswert ist, dass im Beispiel von Figur 12 dieselbe erfindungsgemässe Vorrichtung 1 für drei verschiedene Fremdmaterialien 421, 422, 423 verwendet werden kann. Mit anderen Worten: Es braucht nicht für jedes Fremdmaterial 42 eigens ein dediziertes Spektralfilter 6 entworfen und gebaut zu werden; ebenso genügen eine einzige Strahlungsquelle 2, ein einziger Strahlungssensor 8 und ein einziges Spektralband.

Selbstverständlich ist die vorliegende Erfindung nicht auf die oben diskutierten Ausführungsformen beschränkt. Bei Kenntnis der Erfindung wird der Fachmann weitere Varianten, im Umfang der nachstehenden Ansprüche, herleiten können.

### BEZUGSZEICHENLISTE

- 1: erfindungsgemässe Vorrichtung

- 2: Strahlungsquelle

- 3: von der Strahlungsquelle erzeugte elektromagnetische Strahlung
- 30: spektrale Intensitätsverteilung

- 4: textiles Fasergebilde
- 41: Grundmaterial des textilen Fasergebildes
- 42: Fremdmaterial im textilen Fasergebilde
- 421: Polystyrol
- 422: Polyethylen
- 423: Polypropylen

- 5: am textilen Fasergebilde reflektierte oder transmittierte Strahlung
- 50: spektrale Intensitätsverteilung

- 6: Spektralfilter

- 7: Strahlung nach dem Spektralfilter
- 70: Intensität der detektierten Strahlung als Funktion des Anteils an Fremdmaterialien

- 8: Strahlungssensor

## Patentansprüche

1. Vorrichtung (1) zur Untersuchung eines zwei Bestandteile (41, 42) enthaltenden textilen Fasergebildes (4), beinhaltend
eine Strahlungsquelle (2) zum Senden von elektromagnetischer Strahlung (3) in einem Spektralband in Richtung des textilen Fasergebildes (4) zur Wechselwirkung mit dem textilen Fasergebilde (4),
einen Strahlungssensor (8) zum Empfangen mindestens eines Teils der elektromagnetischen Strahlung (7) nach der Wechselwirkung mit dem textilen Fasergebilde (4) und
ein Spektralfilter (6) mit spektralen Eigenschaften in dem Spektralband zum Filtern mindestens eines Teils der elektromagnetischen Strahlung (5) vor oder nach der Wechselwirkung mit dem textilen Fasergebilde (4),
wobei die zwei Bestandteile (41, 42) des textilen Fasergebildes (4) zwei voneinander verschiedene Elemente aus der folgenden Menge sind: Baumwolle, Leinen, Schurwolle, Polyethylen, Polypropylen, Polyvinylchlorid, Polyester, Polyacryl, Viskose, Modal, Lyocell, Polyethylenterephthalat, Polystyrol, Polyamid, Acrylnitril-Butadien-Styrol-Copolymer, Polymethylmethacrylat, Polyoxymethylen, Elastan, Aramid, Acetat, Cupro, ausgenommen das Paar Baumwolle und Polyethyler
**dadurch gekennzeichnet, dass**
der Transmissionsgrad oder der Reflexionsgrad des Spektralfilters (6) in dem Spektralband mindestens ein lokales Maximum und mindestens ein lokales Minimum aufweist und
die spektralen Eigenschaften des Spektralfilters (6) in dem Spektralband derart auf die spektralen Eigenschaften der Strahlungsquelle (2) und jedes der beiden Bestandteile (41, 42) abgestimmt sind, dass eine vom Strahlungssensor (8) empfangene Strahlungsintensität eine monotone Funktion des Mischungsverhältnisses der beiden Bestandteile (41, 42) ist.

2. Vorrichtung (1) nach Anspruch 1, wobei die zwei Bestandteile (41, 42) des textilen Fasergebildes (4) ein Paar aus der folgenden Menge sind: Baumwolle und Polypropylen, Baumwolle und Polyvinylchlorid, Baumwolle und Polyester, Baumwolle und Polyacryl, Baumwolle und Viskose, Baumwolle und Polyethylenterephthalat, Baumwolle und Polystyrol, Baumwolle und Polyamid, Baumwolle und Acrylnitril-Butadien-Styrol-Copolymer, Baumwolle und Polymethylmethacrylat, Baumwolle und Polyoxymethylen.

3. Vorrichtung (1) nach einem der vorangehenden Ansprüche, wobei das mindestens eine lokale Maximum bei derjenigen Wellenlänge bzw. denjenigen Wellenlängen der elektromagnetischen Strahlung (3) liegt, bei welcher bzw. bei welchen der Absolutwert der Differenz der Absorptionsgrade, der Transmissionsgrade oder der Reflexionsgrade der beiden Bestandteile (41, 42) ein lokales Maximum aufweist.

4. Vorrichtung (1) nach einem der vorangehenden Ansprüche, wobei der Transmissionsgrad oder der Reflexionsgrad des Spektralfilters (6) in dem Spektralband mindestens je zwei lokale Maxima und lokale Minima aufweist.

5. Vorrichtung (1) nach einem der vorangehenden Ansprüche, wobei das Spektralfilter (6) als Reflexionsfilter oder als Transmissionsfilter und vorzugsweise als Interferenzfilter ausgebildet ist.

6. Vorrichtung (1) nach einem der vorangehenden Ansprüche, wobei das Spektralband im Wellenlängenbereich zwischen 300 nm und 2200 nm und vorzugsweise im Wellenlängenbereich zwischen 700 nm und 1900 nm liegt.

7. Vorrichtung (1) nach einem der vorangehenden Ansprüche, wobei die spektralen Eigenschaften des Spektralfilters (6) in dem Spektralband derart auf die spektralen Eigenschaften der Strahlungsquelle (2) und jedes der beiden Bestandteile (41, 42) abgestimmt sind, dass eine vom Strahlungssensor (8) empfangene Strahlungsintensität eine lineare Funktion des Mischungsverhältnisses der beiden Bestandteile (41, 42) ist.

8. Vorrichtung (1) nach einem der vorangehenden Ansprüche, beinhaltend ein optisches Abbildungssystem zur Abbildung des textilen Fasergebildes (4) auf den Strahlungssensor (8), wobei der Strahlungssensor (8) ortsauflösend und entweder als digitale Kamera mit einem zweidimensionalen Bildwandler oder als eindimensionaler Zeilensensor ausgebildet ist.

9. System bestehend aus einem zwei Bestandteile (41, 42) enthaltenden textilen Fasergebilde (4) und einer Vorrichtung (1) zur Untersuchung des textilen Fasergebildes (4) nach einem der Ansprüche 1 bis 8.

10. Verfahren zur Untersuchung eines zwei Bestandteile (41, 42) enthaltenden textilen Fasergebildes (4), wobei
elektromagnetische Strahlung (3) in einem Spektralband von einer Strahlungsquelle (2) in Richtung des textilen Fasergebildes (4) gesendet wird,
mindestens ein Teil der elektromagnetischen Strahlung (3) mit dem textilen Fasergebilde (4) wechselwirkt,
mindestens ein Teil der elektromagnetischen Strahlung (7) nach der Wechselwirkung mit dem textilen Fasergebilde (4) von einem Strahlungssensor (8) empfangen wird und
mindestens ein Teil der elektromagnetischen Strahlung (5) vor oder nach der Wechselwirkung mit dem textilen Fasergebilde (4) von einem Spektralfilter (6) mit spektralen Eigenschaften in dem Spektralband gefiltert wird,
wobei die zwei Bestandteile (41, 42) des textilen Fasergebildes (4) zwei voneinander verschiedene Elemente aus der folgenden Menge sind: Baumwolle, Leinen, Schurwolle, Polyethylen, Polypropylen, Polyvinylchlorid, Polyester, Polyacryl, Viskose, Modal, Lyocell, Polyethylenterephthalat, Polystyrol, Polyamid, Acrylnitril-Butadien-Styrol-Copolymer, Polymethylmethacrylat, Polyoxymethylen, Elastan, Aramid, Acetat, Cupro, ausgenommen das Paar Baumwolle und Polyethylen,
**dadurch gekennzeichnet, dass**
das Spektralfilter (6) derart gewählt wird, dass sein Transmissionsgrad oder sein Reflexionsgrad in dem Spektralband mindestens ein lokales Maximum und mindestens ein lokales Minimum aufweist und
seine spektralen Eigenschaften in dem Spektralband derart auf die spektralen Eigenschaften der Strahlungsquelle (2) und jedes der beiden Bestandteile (41, 42) im textilen Fasergebilde (4) abgestimmt sind, dass eine vom Strahlungssensor (8) empfangene Strahlungsintensität eine monotone Funktion des Mischungsverhältnisses der beiden Bestandteile (41, 42) ist.

11. Verfahren nach Anspruch 10, wobei das Spektralband im Wellenlängenbereich zwischen 300 nm und 2200 nm und vorzugsweise im Wellenlängenbereich zwischen 700 nm und 1900 nm liegt.

12. Verfahren nach Anspruch 10 oder 11, wobei die zwei Bestandteile (41, 42) des textilen Fasergebildes (4) ein Paar aus der folgenden Menge sind: Baumwolle und Polypropylen, Baumwolle und Polyvinylchlorid, Baumwolle und Polyester, Baumwolle und Polyacryl, Baumwolle und Viskose, Baumwolle und Polyethylenterephthalat, Baumwolle und Polystyrol, Baumwolle und Polyamid, Baumwolle und Acrylnitril-Butadien-Styrol-Copolymer, Baumwolle und Polymethylmethacrylat, Baumwolle und Polyoxymethylen.

13. Anwendung des Verfahrens nach Anspruch 10 oder 11 zur Detektion eines Fremdmaterials (42) in einem Grundmaterial (41), wobei das Fremdmaterial (42) und das Grundmaterial (41) die zwei Bestandteile des textilen Fasergebildes (4) sind.

14. Anwendung des Verfahrens nach Anspruch 10 oder 11 zur Bestimmung eines Mischungsverhältnisses der zwei Bestandteile (41, 42) des textilen Fasergebildes (4).

## Claims

1. Device (1) for investigating a textile fiber structure (4) containing two components (41, 42), comprising
a radiation source (2) for transmitting electromagnetic radiation (3) in a spectral band in the direction of the textile fiber structure (4) for interaction with the textile fiber structure (4),
a radiation sensor (8) for receiving at least a portion of the electromagnetic radiation (7) after interaction with the textile fiber structure (4), and
a spectral filter (6) having spectral properties in the spectral band for filtering at least a portion of the electromagnetic radiation (5) before or after interaction with the textile fiber structure (4),
wherein
the two components (41, 42) of the textile fiber structure (4) are two mutually different elements from the following set: cotton, linen, virgin wool, polyethylene, polypropylene, polyvinyl chloride, polyester, polyacrylic, viscose, modal, lyocell, polyethylene terephthalate, polystyrene, polyamide, acrylonitrile-butadiene-styrene copolymer, polymethyl methacrylate, polyoxymethylene, elastane, aramid, acetate, cupro, excluding the pair of cotton and polyethylene,
**characterized in that**
the transmittance or the reflectance of the spectral filter (6) in the spectral band has at least one local maximum and at least one local minimum, and
the spectral properties of the spectral filter (6) in the spectral band are adapted to the spectral properties of the radiation source (2) and each of the two components (41, 42) such that a radiation intensity received by the radiation sensor (8) is a monotonic function of the mixing ratio of the two components (41, 42).

2. Device (1) according to claim 1, wherein the two components (41, 42) of the textile fiber structure (4) are a pair from the following set: cotton and polypropylene, cotton and polyvinyl chloride, cotton and polyester, cotton and polyacrylic, cotton and viscose, cotton and polyethylene terephthalate, cotton and polystyrene, cotton and polyamide, cotton and acrylonitrile-butadiene-styrene copolymer, cotton and polymethyl methacrylate, cotton and polyoxymethylene.

3. Device (1) according to any one of the preceding claims, wherein the at least one local maximum lies at the wavelength or wavelengths of the electromagnetic radiation (3) at which the absolute value of the difference between the absorptances, transmittances, or reflectances of the two components (41, 42) has a local maximum.

4. Device (1) according to any one of the preceding claims, wherein the transmittance or the reflectance of the spectral filter (6) in the spectral band has at least two local maxima and at least two local minima.

5. Device (1) according to any one of the preceding claims, wherein the spectral filter (6) is configured as a reflection filter or as a transmission filter and preferably as an interference filter.

6. Device (1) according to any one of the preceding claims, wherein the spectral band lies in the wavelength range between 300 nm and 2200 nm and preferably in the wavelength range between 700 nm and 1900 nm.

7. Device (1) according to any one of the preceding claims, wherein the spectral properties of the spectral filter (6) in the spectral band are adapted to the spectral properties of the radiation source (2) and each of the two components (41, 42) such that a radiation intensity received by the radiation sensor (8) is a linear function of the mixing ratio of the two components (41, 42).

8. Device (1) according to any one of the preceding claims, comprising an optical imaging system for imaging the textile fiber structure (4) onto the radiation sensor (8), wherein the radiation sensor (8) is spatially resolving and is configured either as a digital camera having a two-dimensional image converter or as a one-dimensional line sensor.

9. System consisting of a textile fiber structure (4) containing two components (41, 42) and a device (1) for investigating the textile fiber structure (4) according to any one of claims 1 to 8.

10. Method for investigating a textile fiber structure (4) containing two components (41, 42), wherein
electromagnetic radiation (3) in a spectral band is transmitted from a radiation source (2) in the direction of the textile fiber structure (4),
at least a portion of the electromagnetic radiation (3) interacts with the textile fiber structure (4),
at least a portion of the electromagnetic radiation (7) is received by a radiation sensor (8) after interaction with the textile fiber structure (4), and
at least a portion of the electromagnetic radiation (5) is filtered by a spectral filter (6) having spectral properties in the spectral band before or after interaction with the textile fiber structure (4),
wherein
the two components (41, 42) of the textile fiber structure (4) are two mutually different elements from the following set: cotton, linen, virgin wool, polyethylene, polypropylene, polyvinyl chloride, polyester, polyacrylic, viscose, modal, lyocell, polyethylene terephthalate, polystyrene, polyamide, acrylonitrile-butadiene-styrene copolymer, polymethyl methacrylate, polyoxymethylene, elastane, aramid, acetate, cupro, excluding the pair of cotton and polyethylene,
**characterized in that**
the spectral filter (6) is selected such that
its transmittance or its reflectance in the spectral band has at least one local maximum and at least one local minimum, and
its spectral properties in the spectral band are adapted to the spectral properties of the radiation source (2) and each of the two components (41, 42) in the textile fiber structure (4) such that a radiation intensity received by the radiation sensor (8) is a monotonic function of the mixing ratio of the two components (41, 42).

11. Method according to claim 10, wherein the spectral band lies in the wavelength range between 300 nm and 2200 nm and preferably in the wavelength range between 700 nm and 1900 nm.

12. Method according to claim 10 or 11, wherein the two components (41, 42) of the textile fiber structure (4) are a pair from the following set: cotton and polypropylene, cotton and polyvinyl chloride, cotton and polyester, cotton and polyacrylic, cotton and viscose, cotton and polyethylene terephthalate, cotton and polystyrene, cotton and polyamide, cotton and acrylonitrile-butadiene-styrene copolymer, cotton and polymethyl methacrylate, cotton and polyoxymethylene.

13. Use of the method according to claim 10 or 11 for detecting a foreign material (42) in a base material (41), wherein the foreign material (42) and the base material (41) are the two components of the textile fiber structure (4).

14. Use of the method according to claim 10 or 11 for determining a mixing ratio of the two components (41, 42) of the textile fiber structure (4).

## Revendications

1. Dispositif (1) pour l'analyse d'une structure de fibres textile (4) contenant deux composants (41, 42), comprenant
une source de rayonnement (2) pour transmettre un rayonnement électromagnétique (3) dans une bande spectrale en direction de la structure de fibres textile (4) pour interaction avec la structure de fibres textile (4),
un capteur de rayonnement (8) pour recevoir au moins une partie du rayonnement électromagnétique (7) après interaction avec la structure de fibres textile (4), et
un filtre spectral (6) présentant des propriétés spectrales dans la bande spectrale pour filtrer au moins une partie du rayonnement électromagnétique (5) avant ou après interaction avec la structure de fibres textile (4),
dans lequel
les deux composants (41, 42) de la structure de fibres textile (4) sont deux éléments mutuellement différents de l'ensemble suivant : coton, lin, laine vierge, polyéthylène, polypropylène, chlorure de polyvinyle, polyester, polyacrylique, viscose, modal, lyocell, téréphtalate de polyéthylène, polystyrène, polyamide, copolymère acrylonitrile-butadiène-styrène, polyméthacrylate de méthyle, polyoxyméthylène, élasthanne, aramide, acétate, cupro, à l'exclusion de la paire coton et polyéthylène,
**caractérisé en ce que**
la transmittance ou la réflectance du filtre spectral (6) dans la bande spectrale présente au moins un maximum local et au moins un minimum local, et
les propriétés spectrales du filtre spectral (6) dans la bande spectrale sont adaptées aux propriétés spectrales de la source de rayonnement (2) et de chacun des deux composants (41, 42) de telle sorte qu'une intensité de rayonnement reçue par le capteur de rayonnement (8) est une fonction monotone du rapport de mélange des deux composants (41, 42).

2. Dispositif (1) selon la revendication 1, dans lequel les deux composants (41, 42) de la structure de fibres textile (4) sont une paire issue de l'ensemble suivant : coton et polypropylène, coton et chlorure de polyvinyle, coton et polyester, coton et polyacrylique, coton et viscose, coton et téréphtalate de polyéthylène, coton et polystyrène, coton et polyamide, coton et copolymère acrylonitrile-butadiène-styrène, coton et polyméthacrylate de méthyle, coton et polyoxyméthylène.

3. Dispositif (1) selon l'une quelconque des revendications précédentes, dans lequel l'au moins un maximum local se situe à la ou aux longueurs d'onde du rayonnement électromagnétique (3) auxquelles la valeur absolue de la différence entre les absorptances, les transmittances ou les réflectances des deux composants (41, 42) présente un maximum local.

4. Dispositif (1) selon l'une quelconque des revendications précédentes, dans lequel la transmittance ou la réflectance du filtre spectral (6) dans la bande spectrale présente au moins deux maxima locaux et au moins deux minima locaux.

5. Dispositif (1) selon l'une quelconque des revendications précédentes, dans lequel le filtre spectral (6) est configuré comme filtre de réflexion ou comme filtre de transmission et de préférence comme filtre interférentiel.

6. Dispositif (1) selon l'une quelconque des revendications précédentes, dans lequel la bande spectrale se situe dans la plage de longueurs d'onde comprise entre 300 nm et 2200 nm et de préférence dans la plage de longueurs d'onde comprise entre 700 nm et 1900 nm.

7. Dispositif (1) selon l'une quelconque des revendications précédentes, dans lequel les propriétés spectrales du filtre spectral (6) dans la bande spectrale sont adaptées aux propriétés spectrales de la source de rayonnement (2) et de chacun des deux composants (41, 42) de telle sorte qu'une intensité de rayonnement reçue par le capteur de rayonnement (8) est une fonction linéaire du rapport de mélange des deux composants (41, 42).

8. Dispositif (1) selon l'une quelconque des revendications précédentes, comprenant un système d'imagerie optique pour former une image de la structure de fibres textile (4) sur le capteur de rayonnement (8), dans lequel le capteur de rayonnement (8) est à résolution spatiale et est configuré soit comme une caméra numérique comportant un convertisseur d'image bidimensionnel, soit comme un capteur linéaire unidimensionnel.

9. Système constitué d'une structure de fibres textile (4) contenant deux composants (41, 42) et d'un dispositif (1) pour l'analyse de la structure de fibres textile (4) selon l'une quelconque des revendications 1 à 8.

10. Procédé pour l'analyse d'une structure de fibres textile (4) contenant deux composants (41, 42), dans lequel
un rayonnement électromagnétique (3) dans une bande spectrale est transmis par une source de rayonnement (2) en direction de la structure de fibres textile (4),
au moins une partie du rayonnement électromagnétique (3) interagit avec la structure de fibres textile (4),
au moins une partie du rayonnement électromagnétique (7) est reçue par un capteur de rayonnement (8) après interaction avec la structure de fibres textile (4), et
au moins une partie du rayonnement électromagnétique (5) est filtrée par un filtre spectral (6) présentant des propriétés spectrales dans la bande spectrale avant ou après interaction avec la structure de fibres textile (4),
dans lequel
les deux composants (41, 42) de la structure de fibres textile (4) sont deux éléments mutuellement différents de l'ensemble suivant : coton, lin, laine vierge, polyéthylène, polypropylène, chlorure de polyvinyle, polyester, polyacrylique, viscose, modal, lyocell, téréphtalate de polyéthylène, polystyrène, polyamide, copolymère acrylonitrile-butadiène-styrène, polyméthacrylate de méthyle, polyoxyméthylène, élasthanne, aramide, acétate, cupro, à l'exclusion de la paire coton et polyéthylène,
**caractérisé en ce que**
le filtre spectral (6) est sélectionné de telle sorte que
sa transmittance ou sa réflectance dans la bande spectrale présente au moins un maximum local et au moins un minimum local, et
ses propriétés spectrales dans la bande spectrale sont adaptées aux propriétés spectrales de la source de rayonnement (2) et de chacun des deux composants (41, 42) dans la structure de fibres textile (4) de telle sorte qu'une intensité de rayonnement reçue par le capteur de rayonnement (8) est une fonction monotone du rapport de mélange des deux composants (41, 42).

11. Procédé selon la revendication 10, dans lequel la bande spectrale se situe dans la plage de longueurs d'onde comprise entre 300 nm et 2200 nm et de préférence dans la plage de longueurs d'onde comprise entre 700 nm et 1900 nm.

12. Procédé selon la revendication 10 ou 11, dans lequel les deux composants (41, 42) de la structure de fibres textile (4) sont une paire issue de l'ensemble suivant : coton et polypropylène, coton et chlorure de polyvinyle, coton et polyester, coton et polyacrylique, coton et viscose, coton et téréphtalate de polyéthylène, coton et polystyrène, coton et polyamide, coton et copolymère acrylonitrile-butadiène-styrène, coton et polyméthacrylate de méthyle, coton et polyoxyméthylène.

13. Utilisation du procédé selon la revendication 10 ou 11 pour détecter une matière étrangère (42) dans une matière de base (41), dans laquelle la matière étrangère (42) et la matière de base (41) sont les deux composants de la structure de fibres textile (4).

14. Utilisation du procédé selon la revendication 10 ou 11 pour déterminer un rapport de mélange des deux composants (41, 42) de la structure de fibres textile (4).
